# EUROPEAN PATENT APPLICATION

(11) **EP 2 298 967 A1**
(43) Date of publication of application: **23.03.2011**
(21) Application number: 10176061.9
(22) Date of filing: 09.09.2010
(51) Int. Cl.: C25D 11/02, F28F 19/02

(54) **Method for anodizing metallic alloys, particularly for heat exchangers made of aluminum alloys and the like for condensing boilers**

(30) Priority: 18.09.2009 IT MI20091593
(71) Applicant: UNICAL AG S.p.A., 46033 Castel d'Ario (MN) (IT)
(72) Inventor: Morini, Mario, 27043 Broni PV, (IT)
(74) Representative: Modiano, Micaela Nadia

(57) **Abstract**

A method (100) for anodizing metallic alloys, particularly for heat exchangers made of aluminum alloys and the like for condensing boilers, comprising a step (104) of immersing at least one heat exchanger (50) or the like made of a metallic alloy in a bath (3) of an electrolytic solution (4) functionally associated with a source of electric current through the heat exchanger, the anodizing method (100) then providing for a step (105) of anodizing the heat exchanger (50) immersed in the bath (3), so as to anodize at least the outer surfaces of the heat exchanger (50), the method comprising a step (106) of pumping the electrolytic solution (4) into the heat exchanger (50) immersed in the bath (3) for the forced circulation of the electrolytic solution (4) in the internal passage channels (51, 52, 53) of the heat exchanger (50) so as to anodize the inner surfaces of the heat exchanger (50).

## Description

The present invention relates to a method for anodizing metallic alloys, particularly for heat exchangers made of aluminum alloys and the like for condensing boilers, and to the respective apparatus.

In the field of heat exchangers and the like for condensing boilers, it is known to use aluminum alloys as the main material for producing the exchangers.

This choice is closely linked to the inherent chemical and physical properties of the material.

It is in fact known that aluminum and its alloys have, in addition to a relatively low specific gravity, a high heat conductivity and low thermal inertia; properties which are ideal for the provision of heat exchangers.

Moreover, aluminum and its alloys are easy to machine with chipforming processes and are ideal for casting, die-casting or extrusion processes.

These advantages, which are thus linked to the more technological aspect of the material, make it possible to obtain parts even with complex geometries, allowing to provide heat exchangers that have high thermal efficiencies.

Moreover, aluminum and its alloys have good corrosion resistance. More precisely, the corrosion resistance of aluminum and of its alloys depend on the metallurgical conditions of the alloy proper, i.e., on the elements that constitute the alloy, on the nature and quality of the water, and on the aggressiveness of the environment in which the heat exchanger operates.

As is known, aluminum and its alloys, when they come in contact with the oxygen that is present in air or water, oxidize and form a protective oxide film, known as passivation film, which adheres tightly to the surface and provides the metal with good resistance to corrosive attack.

More precisely, the film that forms on the surface of the aluminum is generally stable in a pH range comprised between 5 and 8.5; however, outside of this range it becomes active and unstable and tends to dissolve.

This limitation clashes with the acidity that is present in the exhaust gases and in the water with which heat exchangers for condensing boilers are forced to work.

This natural protection is in fact insufficient to protect the ducts of the heat exchanger against highly corrosive acidic and basic attacks.

More precisely, when this metal operates in environments or with chemical solutions that are aggressive and have a pH outside of the range comprised between 5 and 8.5, the natural oxide film is attacked and destroyed and in the water circuit the aluminum tends to dissolve, generating hydrogen.

In particular, on the exhaust gas side of the heat exchanger, the combustion gases, loaded with water vapor, condense in the lower portion of the exchanger, so that the resulting condensation, having a pH comprised between 3.5 and 5.5, damages the walls of the exchanger with which it comes into contact.

For example, when methane gas is used that has traces of sulfur, the combustion gases contain corrosive sulfurous vapors and sulfuric acid in their condensation, giving rise to an extremely corrosive environment whose action is promoted by the high operating temperatures of the heat exchanger.

Another type of attack that the heat exchanger can receive is galvanic corrosion. As is known, when two different metals come into contact, through water, a galvanic cell is created by means of which, depending on the relative position in the electrochemical series, one of the two metals dissolves.

For example, in the presence of copper, since this is the noblest metal among the metals used in heating systems, the other metals, including aluminum and its alloys, dissolve.

More precisely, aluminum is particularly subject to galvanic corrosion, since it is very distant from copper in the electrochemical series; and the current that is generated by the corrosion is very high. The aluminum thus acts as a true sacrificial electrode and corrodes rapidly in the point of contact with the copper.

Depending on the quantity of copper that is present, the corrosion can assume a first form, in which a large area of the aluminum is covered by the copper, due for example to attack by residues of welding flux in which there are inevitably exposed points. Here galvanic corrosion occurs with the current concentrated in the point where the sacrificial metal is in contact with the water. The current is intense and corrosion by perforation of the metal is very quick and rapidly becomes rust-through. The size of the hole on the outside of the aluminum element is approximately the same as on the inside, as if the element had been perforated with a drill bit.

Other than in the preceding situation, in another possible form of corrosion, small copper chips may adhere to the inner surface of the aluminum element. Galvanic corrosion occurs here as well, but this time the current is concentrated where the copper is deposited. The result is the loss of metal on the contact surface, giving rise to a form of localized and more extensive corrosion than in the preceding case.

In addition to galvanic corrosion, in view of the field of application of heat exchangers, the aluminum and its alloys of which such heat exchangers are made are subject to another form of corrosion which is due to cavitation, with consequent erosion phenomena.

In both attacks, a strong mechanical contribution to the corrosion phenomenon occurs which is due, in the first case, to the implosion of countless minute steam bubbles, which form in the points where the pressure of the fluid, due to large velocity gradients, becomes lower than the pressure of the fluid at that temperature, and in the second case the mechanical action is merely erosive, due to the high flow-rates of the liquids.

Above certain flow-rates or turbulence rates, the water can in fact apply intense pressures, such as to physically remove the protective surface layer of oxide and thus promote the onset of anode regions on the surface of the exposed metal.

Moreover, erosion phenomena can occur in the exhaust gas duct by machining chips or residues of foundry sand of material which is progressively removed and conveyed by the exhaust gases. These particles, conveyed by the fluid, can remove the natural protective layer of the aluminum and expose anode regions on the surface of the metal.

The phenomenon is self-sustaining, producing new material by removal, which in turn, in the exhaust gas path, performs an erosive action in the adjacent parts and on the surfaces of the exchanger in direct contact with the exhaust gases.

Combined with the formation of condensation, this granular material becomes compact and can block the exhaust gas passages in the lower portion of the exchanger.

In order to obviate these drawbacks, it is known in the background art to introduce in the alloy elements such as, for example, silicon, which by means of appropriate thermal treatments allow the alloy to acquire chemical-physical characteristics that are adapted to withstand the previously described attacks.

For example, in order to greatly increase the mechanical characteristics, such as for example hardness, which on a Brinell scale can rise from 60 HB to 100 HB, it is possible to perform a specific quenching thermal treatment which comprises a step of heating the part in an oven at a temperature comprised between 515°C and 535°C for a variable time comprised between 6 hours and 12 hours, followed by sudden cooling in water at a temperature comprised between 20°C and 70°C.

Although this treatment also comprises a tempering step which is performed at a temperature comprised between 140°C and 180°C for a variable time comprised between 6 and 12 hours, aluminum heat exchangers, whether cast or die-cast, with a high-silicon alloy create problems of cracking in the thickness of the thinner parts, with leakage of water in pressure tightness tests and consequent rejection of the parts. This occurs in medium/large exchangers and less in smaller exchangers because they are more compact.

Therefore, although from a chemical-metallurgical standpoint the addition of elements such as silicon in the alloy has a substantial effect on corrosion resistance in addition to the necessary flowability of the molten metal to facilitate casting or die-casting processes, any thermal treatment which makes aluminum harder can cause, on large parts, cracking problems especially on castings where the alloy is high in silicon.

A known alternative to thermal treatments consists in "enhancing" the natural oxidation of aluminum and its alloys.

This anodic oxidation, known as "hard" oxidation, is produced artificially with a wide range of thicknesses and hardnesses for obtaining the maximum possible protection of the aluminum and of its alloys, in particular for those that contain a percentage of silicon comprised between 7% and 12%.

This oxidation provides for immersion of the part in a bath of 20% sulfuric acid at a temperature comprised between -5°C and 0°C.

The coating obtained electrolytically, which can vary in general from 10 micrometers to 40 micrometers with a hardness of the oxidized layer of up to 350 HB on the Brinell scale, is composed of aluminum oxide, without the addition of material, and increases considerably the natural protection of aluminum against corrosion, surface hardness, improving it from the mechanical point of view and protecting it against phenomena of abrasion and erosion.

For heat exchangers made of silicon aluminum alloy, this treatment is ideal both for water exposure and for exhaust gas condensation.

Moreover, the oxide layer is dielectric and therefore resistant to galvanic corrosion and for any grounding it is necessary to perforate the oxide layer.

Such coating in fact is not a thermal insulation, it is rather an electrical insulation and well withstands temperatures up to between 320°C and 350°C.

For heat exchangers that have a dual thermal use and produce sanitary hot water in addition to heating water, anodic oxidation is considered suitable for contact with water for food use.

Such heat exchangers subjected to the hard anodic oxidation process of the known type are not devoid of drawbacks, which include the fact that the very shape of the heat exchangers prevents constancy of the thickness of the oxidized layer, leading to a thickness of the oxidized layer on the external walls in the order of 40 micrometers and on the inner walls, i.e., on the parts that are more important to protect, to a thickness which can vary between 12 micrometers and 17 micrometers, such as on ducts densely fitted with rods or fins on the exhaust gas side, and between 4 micrometers and 6 micrometers such as in the water circuit.

This thickness variability leads to less protected regions, which lead to premature deterioration of the heat exchanger.

The aim of the present invention is to provide a method for anodizing metallic alloys, particularly for heat exchangers made of aluminum alloys and the like for condensing boilers, with the respective apparatus, which make it possible to render the layer of oxide uniform both on the outer walls and on the inner walls, extending the useful life of the anodized heat exchanger.

Within this aim, an object of the present invention is to provide an anodizing method and an apparatus which are easy to provide and have competitive costs.

This aim, as well as these and other objects that will become better apparent hereinafter, are achieved by a method for anodizing metallic alloys, particularly for heat exchangers made of aluminum alloys and the like for condensing boilers, comprising:
- a step of immersing in a bath of an electrolytic solution at a preset temperature at least one heat exchanger or the like made of a metallic alloy, said bath being functionally associated with a flow of electric current through the heat exchanger immersed within said electrolytic solution,
- a step of anodizing said at least one heat exchanger immersed in said bath, with retention of said at least one heat exchanger for a preset retention time, circulating electric current through the heat exchanger starting from a substantially nil initial value to a preset value with a preset rising ramp of said value to anodize at least the outer surfaces of said at least one heat exchanger,
   **characterized in that** it comprises a step of pumping said electrolytic solution into said at least one heat exchanger immersed in said bath, performed during said anodizing step for the forced circulation of said electrolytic solution in the internal passage channels of said at least one heat exchanger to anodize the inner surfaces of said at least one heat exchanger.

Moreover, this aim, as well as these and other objects that will become better apparent hereinafter, are achieved by an apparatus for processes for anodizing metallic alloys, particularly for heat exchangers made of aluminum alloys and the like for condensing boilers, comprising a tank which contains an electrolytic solution and is functionally connected to a source of electric current through the heat exchanger immersed in said electrolytic solution contained in said tank, **characterized in that** it comprises means for pumping said electrolytic solution contained in said tank which can be connected functionally to at least one heat exchanger immersed in said tank which contains said electrolytic solution by means of a recirculation system for the forced circulation of said electrolytic solution in the internal passage channels of said at least one heat exchanger for anodizing the inner surfaces of said at least one heat exchanger.

Further characteristics and advantages of the present invention will become apparent from the description of a preferred but not exclusive embodiment of a method for anodizing metallic alloys, particularly for heat exchangers made of aluminum alloys and the like for condensing boilers, and of the respective apparatus, according to the invention, illustrated by way of non-limiting example in the accompanying drawings, wherein:

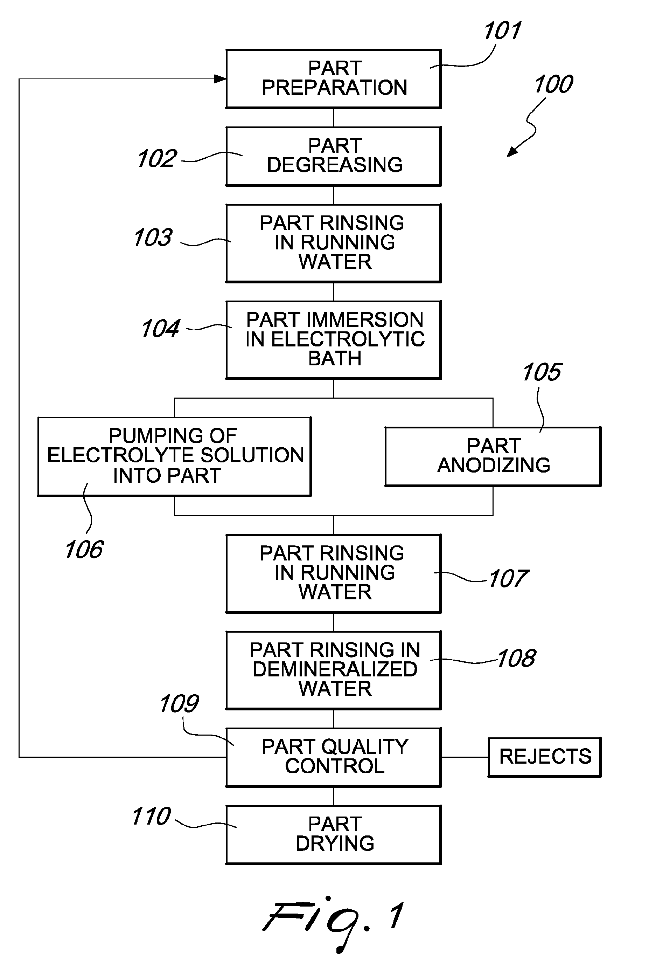

Figure 1 is a block diagram of the method for anodizing metallic alloys, particularly for heat exchangers made of aluminum alloys and the like for condensing boilers, according to the invention;

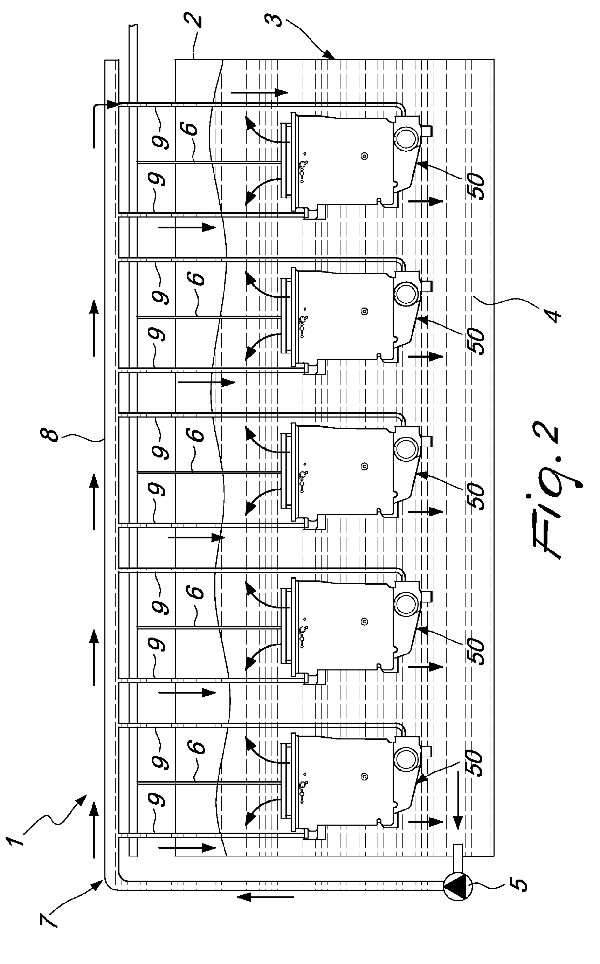

Figure 2 is a schematic side elevation view of the equipment used in the anodizing method shown schematically in Figure 1;

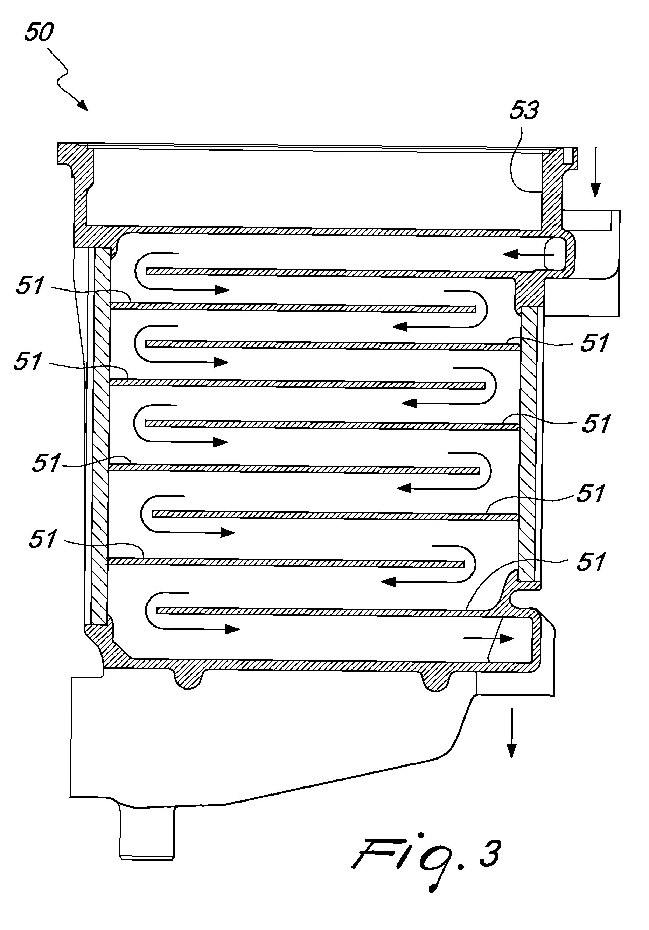

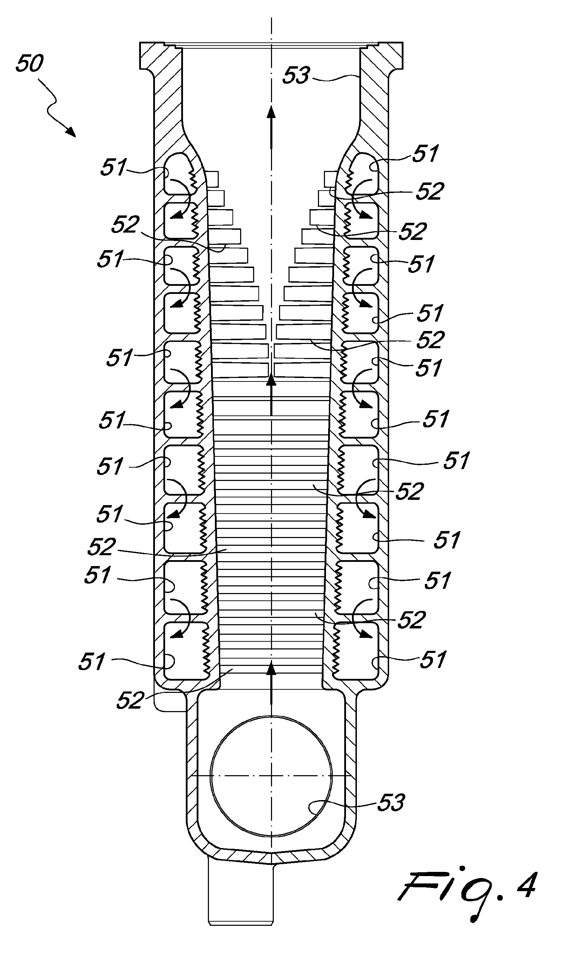

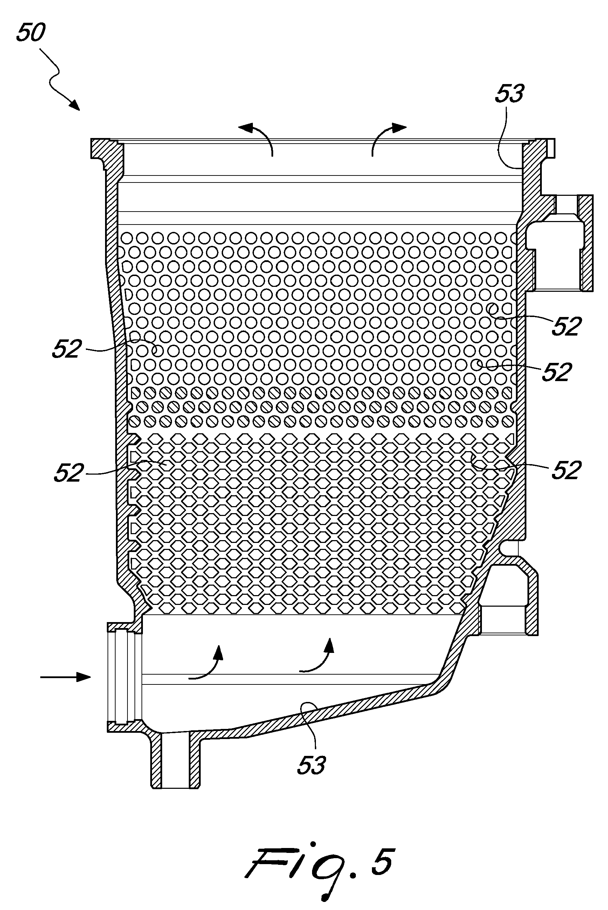

Figures 3 to 5 are sectional views of a heat exchanger during the application of the anodizing method shown schematically in Figure 1.

With reference to the figures, the method for anodizing metallic alloys, particularly for heat exchangers made of aluminum alloys and the like for condensing boilers, according to the invention, generally designated by the reference numeral 100, comprises an initial step 101 in which the parts to be anodized, i.e., in the specific case the heat exchangers made of aluminum or alloys thereof, generally designated by the reference numeral 50, are fixed on adapted supporting frames 6 from which they receive electric current and are moved according to a preset program for example by means of a PLC.

Then there is a degreasing step 102, in which the heat exchanger 50 to be subjected to the anodizing treatment is degreased with an aqueous solution with solvents for metals, in this case for aluminum, at a temperature comprised preferably between 50°C and 60°C, to be then rinsed in a first rinsing step 103 with running water for a time preferably equal to 2 minutes.

At this point of the anodizing method 100, the heat exchanger or exchangers 50, if more than one is to be anodized at a time, are ready for their anodizing.

Then one moves on to a step 104 of immersing the heat exchanger 50 in a bath 3 of an electrolytic solution 4 at a preset temperature comprised between -5°C and 0°C.

Advantageously, the electrolytic solution 4 is an aqueous solution of sulfuric acid with a concentration preferably equal to 180 g/l and with a temperature preferably equal to -4°C.

The bath 3 is functionally associated with an electric current source for the flow of current from the exchanger 50 within the electrolytic solution 4, so as to allow implementation of the subsequent step 105 of anodizing the heat exchanger 50 immersed in the bath 3.

In this anodizing step 105, the heat exchanger 50 remains immersed in the bath 3 for a preset retention time, preferably equal to 45 minutes, while circulating electric current in the exchanger starting from a substantially nil initial value to a preset value, which is preferably equal to 4 amps for each square decimeter of surface to be anodized.

Advantageously, such current increase occurs with a preset rising ramp thereof, preferably of 10 minutes so as to anodize at least the outer surfaces of the heat exchanger 50.

According to the invention, simultaneously with the anodizing step 105 there is a step 106 for pumping the electrolytic solution 4 in the heat exchanger 50 immersed in the bath 3 for the forced circulation of the electrolytic solution 4 in the internal passage channels 51, 52 and 53 of the heat exchanger 50, so as to anodize the inner surfaces of said heat exchanger 50.

Then the heat exchanger 50, which at this point is anodized, is rinsed in a second rinsing step 107 with running water for a time preferably equal to 5 minutes and in a third rinsing step 108, which follows the preceding one, with demineralized water for a time preferably equal to 5 minutes.

Conveniently, there is a quality control step 109 in which, by means of induced-current instruments, the thickness of the layer of oxide that is present on the heat exchanger 50 is detected. Depending on the quality compliance sought, the heat exchanger can be rejected, resubmitted to the anodizing method 100 or, if the preset thickness values of the oxide layer have been reached, it can move on to the drying step 110, in which the heat exchanger is dried with forced air at a temperature preferably equal to 40°C.

For its execution, the anodizing method 100 uses an apparatus for processes for anodizing metallic alloys, particularly for heat exchangers made of aluminum alloys and the like for condensing boilers, generally designated by the reference numeral 1, which comprises a tank 2 that can contain the bath 3 of the electrolytic solution 4 and is functionally connected to a source of electric current to the heat exchanger 50 within said electrolytic solution 4.

According to the invention, the apparatus 1 comprises pumping means 5, which consist for example of a pump so as to allow pumping of the electrolytic solution 4, which can be connected functionally to the heat exchanger or exchangers 50 immersed in the tank 2.

In this manner, a forced circulation of the electrolytic solution 4 in the internal passage channels 51, 52, 53 of each individual heat exchanger 50 is achieved so as to anodize the inner surfaces of said heat exchanger 50 in addition to the outer surfaces, which are already anodized due to the simple fact that the heat exchanger 50 is immersed in the tank 2.

Advantageously, this connection is made possible by means of a recirculation system 7, which comprises a main duct 8 into which the electrolytic solution 4, pumped by the pumping means 5, is conveyed, and from which delivery tubes 9 branch out, one for each internal passage channel 51, 52 and 53, which can be connected functionally to the internal passage channels 51, 52 and 53 by way of universal couplings.

In this manner, the electrolytic solution 4 can flow within the heat exchanger 50, flowing through both the internal passage channels 51 for the water and through the ones designated by the reference numeral 52, which are struck externally by the combustion gases through the passage channel 53.

Conveniently, the electrolytic solution 4 is made to flow within the passage channels 51, 52 and 53 in the actual direction of flow of the water and of the exhaust gases, causing the outflow of the electrolytic solution 4 directly into the tank 2, so as to agitate the bath 3 outside the heat exchanger 50 and facilitate the anodizing of the outer surfaces of the heat exchanger 50.

According to the invention, the heat exchanger 50 made of aluminum alloy for condensing boilers and the like, subjected to the anodizing method 100, has an outer coating of aluminum oxide which has a thickness comprised between 20 micrometers and 40 micrometers deposited on its inner surfaces and comprised between 35 micrometers and 40 micrometers deposited on its outer surfaces.

In practice it has been found that the method for anodizing metallic alloys, particularly for heat exchangers made of aluminum alloys and the like, for condensing boilers, and the respective apparatus, according to the present invention, fully achieve the intended aim and objects, since they make it possible to obtain a "hard" anodic oxidation on all the surfaces of the part with a thickness of the oxide layer which is substantially uniform and greater than that obtainable with the background art.

In particular, it should be stressed that with the anodizing method according to the present invention one obtains the following thicknesses of the oxide layer:
- 35/40 micrometers on the outer walls,
- from a minimum of 25/30 micrometers up to 35/40 micrometers on the rods of the exhaust gas side,
- from a minimum of 20/25 micrometers up to 35/40 micrometers on the inner walls on the water side.

The anodizing method and the respective apparatus thus conceived are susceptible of numerous modifications and variations, all of which are within the scope of the appended claims.

All the details may further be replaced with other technically equivalent elements.

In practice, the materials used, as long as they are compatible with the specific use, as well as the contingent shapes and dimensions, may be any according to requirements and to the state of the art.

The disclosures in Italian Patent Application No. MI2009A001593 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method (100) for anodizing metallic alloys, particularly for heat exchangers made of aluminum alloys and the like, for condensing boilers, comprising:
- a step (104) of immersing in a bath (3) of an electrolytic solution (4) at a preset temperature at least one heat exchanger (50) or the like made of a metallic alloy, said bath (3) being functionally associated with a flow of electric current through the heat exchanger (50) that hangs from the frame (6) within said electrolytic solution (4),
- a step (105) of anodizing said at least one heat exchanger (50) immersed in said bath (3), with retention of said at least one heat exchanger (50) for a preset retention time, circulating electric current starting from a substantially nil initial value to a preset value with a preset rising ramp of said value to anodize at least the outer surfaces of said at least one heat exchanger (50),
**characterized in that** it comprises a step (106) of pumping said electrolytic solution (4) into said at least one heat exchanger (50) immersed in said bath (3), performed during said anodizing step (105) for the forced circulation of said electrolytic solution (4) in the internal passage channels (51, 52, 53) of said at least one heat exchanger (50) to anodize the inner surfaces of said at least one heat exchanger (50).

2. The anodizing method (100) according to claim 1, **characterized in that** said electrolytic solution (4) is an aqueous solution of sulfuric acid with a concentration preferably equal to 180 g/l.

3. The anodizing method (100) according to one or more of the preceding claims, **characterized in that** said electrolytic solution (4) in said bath (3) is at a preset temperature preferably equal to -4°C.

4. The anodizing method (100) according to one or more of the preceding claims, **characterized in that** in said anodizing step (105) the retention time of said at least one heat exchanger (50) in said bath (3) is preferably equal to 45 minutes.

5. The anodizing method (100) according to one or more of the preceding claims, **characterized in that** in said anodizing step (105) the preset value of electric current through the heat exchanger (50) is preferably equal to 4 amps for each square decimeter of exchanger surface, with a preset rising ramp of said preset value of preferably 10 minutes.

6. The anodizing method (100) according to one or more of the preceding claims, **characterized in that** it comprises a step (102) of degreasing said at least one heat exchanger (50) in an aqueous solution with solvents for metals at a temperature preferably comprised between 50°C and 60°C, said degreasing step (102) being performed prior to said immersion step (104).

7. The anodizing method (100) according to one or more of the preceding claims, **characterized in that** it comprises a first step (103) of rinsing with running water for a time preferably equal to 2 minutes said at least one heat exchanger (50) degreased in said degreasing step (102), said first rinsing step (103) being performed between said degreasing step (102) and said immersion step (104).

8. The anodizing method (100) according to one or more of the preceding claims, **characterized in that** it comprises a second step (107) of rinsing with running water for a time preferably equal to 5 minutes said at least one heat exchanger (50) anodized in said anodizing step (105), said second rinsing step (107) being performed after said anodizing step (105).

9. The anodizing method (100) according to one or more of the preceding claims, **characterized in that** it comprises a third step (108) of rinsing with demineralized water for a time preferably equal to 5 minutes said at least one heat exchanger (50) rinsed in said second rinsing step (107), said third rinsing step (108) being performed after said second rinsing step (107).

10. The anodizing method (100) according to one or more of the preceding claims, **characterized in that** it comprises a step (110) of drying, with forced air at a temperature preferably equal to 40°C, said at least one heat exchanger (50).

11. An apparatus (1) for processes for anodizing metallic alloys, particularly for heat exchangers made of aluminum alloys and the like, for condensing boilers, comprising a tank (2) which contains an electrolytic solution (4), **characterized in that** it comprises means (5) for pumping said electrolytic solution (4) contained in said tank (2) which can be connected functionally to at least one heat exchanger (50) connected to a source of electric current through the frame (6) immersed in said tank (2) which contains said electrolytic solution (4) by means of a recirculation system (7) for the forced circulation of said electrolytic solution (4) in the internal passage channels (51, 52, 53) of said at least one heat exchanger (50) for anodizing the inner surfaces of said at least one heat exchanger (50).

12. The apparatus (1) according to the preceding claim, **characterized in that** said recirculation system (7) comprises at least one delivery tube (9) for each internal passage channel (51, 52, 53) formed by said at least one heat exchanger (50), which is functionally connected to said pumping means (5) and can be connected functionally to said internal passage channel (51, 52, 53).

13. An aluminum alloy heat exchanger (50) for condensing boilers and the like, **characterized in that** it comprises an outer coating of aluminum oxide with a thickness comprised between 20 and 40 micrometers deposited on its inner surfaces.

14. The heat exchanger (50), **characterized in that** it comprises an outer coating of aluminum oxide with a thickness comprised between 35 micrometers and 40 micrometers deposited on its outer surfaces.
